# EUROPEAN PATENT APPLICATION

(11) **EP 2 811 793 A1**
(43) Date of publication of application: **10.12.2014**
(21) Application number: 12867145.0
(22) Date of filing: 31.01.2012
(51) Int. Cl.: H04W 52/14

(54) **SIGNALING INDICATION METHOD FOR DOWNLINK POWER ALLOCATION, BASE STATION AND USER EQUIPMENT THEREFOR**

(71) Applicant: Fujitsu Limited, Kawasaki-shi, Kanagawa 211-8588 (JP)
(72) Inventor: LI, Hongchao, Beijing 100025 (CN); ZHOU, Hua, Beijing 100025 (CN); WU, Jianming, Beijing 100025 (CN)
(74) Representative: Wilding, Frances Ward
(86) International application number: PCT/CN2012/070792
(87) International publication number: WO 2013/113151

(57) **Abstract**

Embodiments of the present application provide a signaling indication method for downlink power allocation. The signaling indication method includes: transmitting, by an eNB to UE, ratio information of EPRE for indicating power allocation of the downlink channel and timing indication information of the ratio information, such that the UE performs demodulation or measurement on the downlink channel according to the ratio information and the timing indication information. With the embodiments of the present application, the UE may correctly demodulate phase and amplitude jointly modulated data, or accurately perform channel state measurement, when power used by a physical channel downlink carrying a unicast service in an ABS or a low-power subframe varies dynamically.

## Description

### Technical Field

The present application relates to the field of communications, and in particular to a signaling indication method for downlink power allocation, an eNB and user equipment.

### Background

In order to improve coverage of user equipment in a long-term evolution advanced (LTE-A) system and increase throughput of the system and a data transmission rate of a user, heterogeneous network nodes are introduced. For example, such heterogeneous network nodes include a home eNodeB (HeNB), and a Pico cell, etc. These heterogeneous network nodes cover specific regions or user equipment by using relatively low transmission power, with a relatively flexible manner of networking.

In a Macro-Pico cell co-channel deployment scenario, in order to improve utilization of system resources and enable a Pico cell to cover more pieces of user equipment, a cell range expansion (CRE) region leaning to the Pico cell is introduced into a cell selection method based on reference signal received power (RSRP).

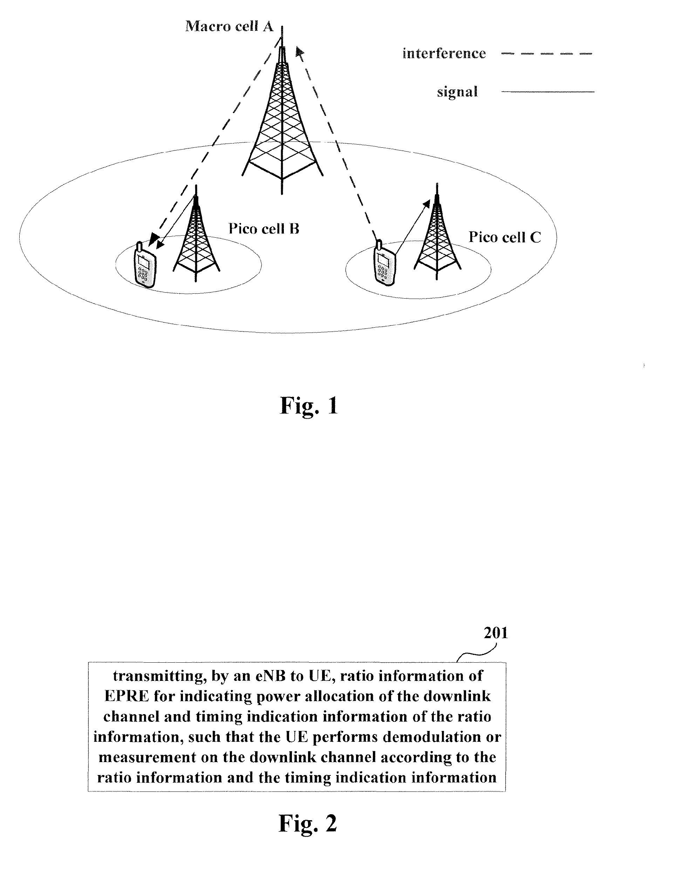

Figure 1 is a schematic diagram of a Macro-Pico scenario. As shown in Fig. 1, user equipment of a CRE region of a Pico cell will be subject to relatively large interference of a Macro cell. When a sum of RSRP of the Pico cell received by the user equipment (UE) and a bias value is greater than RSRP of the Macro cell, the UE belongs to the Pico cell. With the assistance of an enhanced inter-cell interference coordination (eICIC) mechanism, the whole throughput of the system may be upgraded.

Currently, a time domain eICICI mechanism has been written into a standard. In particular, some subframes are configured as almost blank subframes (ABSs). In an ABS, in order to reduce interference to other cells, except that common reference symbols and necessary few control channels use rated power for transmission, lower power is used in other physical resource positions for transmission, or some resources are emptied for not transmitting power.

In the implementation of the present application, the inventors found that if an eNB side uses some physical resources (in physical resource blocks (PRBs)) to schedule unicast services, and performs high-order phase and amplitude joint modulation on data (such as 16QAM or 64QAM) before transmission, in demodulating the data (such as carried in a PDSCH), the UE needs correct information on a ratio between energy per-resource element (EPRE) of the physical downlink shared channel (PDSCH) and EPRE of a common reference symbol (CRS), so as to correctly demodulate the data.

Or, in performing channel state measurement based on a channel state information reference symbol (CSI-RS), the UE needs correct information on a ratio between EPRE of the CSI-RS and EPRE of a PDSCH, so as to correctly perform the channel state measurement.

However, in scheduling a unicast service in an ABS, downlink transmission power varies relatively fast in an ABS pattern, and existing signaling cannot enable the UE to obtain related information on power of a corresponding downlink signal in a real-time manner, thereby affecting accuracy of processing such as data demodulation or channel condition measurement or the like.

It should be noted that the above description of the background is merely provided for clear and complete explanation of the present application and for easy understanding by those skilled in the art. And it should not be understood that the above technical solution is known to those skilled in the art as it is described in the background of the present application.

### Summary

Embodiments of the present application provide a signaling indication method for downlink power allocation, an eNB and user equipment, with an object being to solve a problem that the UE cannot correctly demodulate or measure when power of a downlink channel in an ABS or a low-power subframe varies dynamically.

According to one aspect of the embodiments of the present application, there is provided a signaling indication method for downlink power allocation, applicable to a downlink channel in an almost blank subframe or a low-power subframe, the signaling indication method including:
transmitting, by an eNB to UE, ratio information of energy per-resource element for indicating power allocation of the downlink channel and timing indication information of the ratio information, such that the UE performs demodulation or measurement on the downlink channel according to the ratio information and the timing indication information.

According to another aspect of the embodiments of the present application, there is provided a signaling indication method for downlink power allocation, applicable to a downlink channel in an almost blank subframe or a low-power subframe, the signaling indication method including:
receiving, by UE, ratio information of energy per-resource element for indicating the power allocation of the downlink channel and timing indication information of the ratio information transmitted by an eNB; and
performing, by the UE, demodulation or measurement on the downlink channel, according to the ratio information and the timing indication information.

According to still another aspect of the embodiments of the present application, there is provided an eNB, including:
an information transmitting unit, configured to transmit to UE ratio information of energy per-resource element and timing indication information of the ratio information, such that the UE performs demodulation or measurement on the downlink channel according to the ratio information and the timing indication information;
wherein the ratio information is used for indicating the power allocation of the downlink channel in an almost blank subframe or a low-power subframe.

According to further still another aspect of the embodiments of the present application, there is provided UE, including:
an information receiving unit, configured to receive ratio information of energy per-resource element and timing indication information of the ratio information transmitted by an eNB; wherein the ratio information is used for indicating the power allocation of the downlink channel in an almost blank subframe or a low-power subframe; and
a signal processing unit, configured to perform demodulation or measurement on the downlink channel according to the ratio information and the timing indication information.

According to further still another aspect of the embodiments of the present application, there is provided a computer-readable program, wherein when the program is executed in an eNB, the program enables a computer to carry out the signaling indication method for downlink power allocation as described above in the eNB.

According to further still another aspect of the embodiments of the present application, there is provided a storage medium in which a computer-readable program is stored, wherein the computer-readable program enables a computer to carry out the signaling indication method for downlink power allocation as described above in an eNB.

According to further still another aspect of the embodiments of the present application, there is provided a computer-readable program, wherein when the program is executed in UE, the program enables a computer to carry out the signaling indication method for downlink power allocation as described above in the UE.

According to further still another aspect of the embodiments of the present application, there is provided a storage medium in which a computer-readable program is stored, wherein the computer-readable program enables a computer to carry out the signaling indication method for downlink power allocation as described above in UE.

The advantage of the embodiments of the present application resides in that by transmitting EPRE ratio information of a downlink channel in an ABS or a low-power subframe and timing indication information of the ratio information by an eNB to UE, the UE may correctly demodulate phase and amplitude jointly modulated data, or accurately perform channel state measurement, when power used by a physical channel downlink carrying a unicast service in the ABS or the low-power subframe varies dynamically.

With reference to the following description and drawings, the particular embodiments of the present application are disclosed in detail, and the principle of the present application and the manners of use are indicated. It should be understood that the scope of the embodiments of the present application is not limited thereto. The embodiments of the present application contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including/comprises/ comprising" when used in this specification is taken to specify the presence of stated features, integers, steps or components but does not preclude the presence or addition of one or more other features, integers, steps, components or groups thereof.

### Brief Description of the Drawings

Many aspects of the application can be better understood with reference to the following drawings. The components in the drawings are not necessarily to scale, emphasis instead being placed upon clearly illustrating the principles of the present application. To facilitate illustrating and describing some parts of the application, corresponding portions of the drawings may be exaggerated reduced in size.

Elements and features depicted in one drawing or embodiment of the application may be combined with elements and features depicted in one or more additional drawings or embodiments. Moreover, in the drawings, like reference numerals designate corresponding parts throughout the several views and may be used to designate like or similar parts in more than one embodiment.
Figure 1 is a schematic diagram of a scenario of coexistence of a Macro cell and a Pico cell in a heterogeneous network;
Figure 2 is a flowchart of the signaling indication method of Embodiment 1 of the present application;
Figure 3 is a flowchart of the signaling indication method in which DCI contains a ratio offset value of Embodiment 1 of the present application;
Figure 4 is a flowchart of the signaling indication method in which high-layer signaling contains an offset value of a ratio of Embodiment 1 of the present application;
Figure 5 is a flowchart of the signaling indication method of Embodiment 2 of the present application;
Figure 6 is another flowchart of the signaling indication method of Embodiment 2 of the present application;
Figure 7 is a further flowchart of the signaling indication method of Embodiment 2 of the present application;
Figure 8 is a schematic diagram of the structure of the eNB of Embodiment 3 of the present application;
Figure 9 is a schematic diagram of the structure of the UE of Embodiment 4 of the present application;
Figure 10 is a schematic diagram of the structure of the signal processing unit of Embodiment 4 of the present application; and
Figure 11 is another schematic diagram of the structure of the signal processing unit of Embodiment 4 of the present application.

### Detailed Description

The foregoing and other features of the present application will be apparent with reference to the following description and attached drawings. In the description and drawings, particular embodiments of the application have been disclosed in detail as being indicative of some of the ways in which the principles of the application may be employed, but it is understood that the application is not limited to the described embodiments. Rather, the application includes all changes, modifications and equivalents coming within the scope of the appended claims.

### Embodiment 1

An embodiment of the present application provides a signaling indication method for downlink power allocation, applicable to a downlink channel in an ABS or a low-power subframe. Fig. 2 is a flowchart of the signaling indication method of the embodiment of the present application. As shown in Fig. 2, at an eNB side, the signaling indication method includes:
step 201: transmitting, by an eNB to UE, ratio information of EPRE for indicating power allocation of the downlink channel and timing indication information of the ratio information, such that the UE performs demodulation or measurement on the downlink channel according to the ratio information and the timing indication information.

In this embodiment, the downlink channel in the ABS or the low-power subframe may be a pre-designated channel, and in particular, it may be a PDSCH, and may also be a CSI-RS. However, it is not limited thereto. For example, this method is also applicable to transmission of other channels, such as a PDCCH (physical downlink control channel), an e-PDCCH (enhanced physical downlink control channel), a PHICH (physical hybrid automatic repeat quest indicator channel), an e-PHICH (enhanced physical hybrid automatic repeat quest indicator channel), and an e-PCFICH (enhanced physical control format indication channel), etc. Following description is given taking only a PDSCH and a CSI-RS as examples.

In this embodiment, processing to the downlink channel may include demodulating a downlink data channel or a downlink control channel, and performing channel quality measurement by using a reference symbol, etc. However, it is not limited thereto, and a particular mode of implementation may be determined according to an actual situation.

In this embodiment, high-order phase and amplitude joint modulation may be performed on each downlink channel in the ABS or the low-power subframe by using, for example, 16QAM or 64QAM. However, it is not limited thereto, and other manners of modulation may also be used.

In this embodiment, common reference symbols and necessary few control channels in the ABS use rated power for transmission, and other physical resource positions (such as positions of downlink signals, e.g. PDSCHs, and CSI-RSs, etc.) may use lower power for transmission. However, the present application is not limited to an ABS, and is applicable to other subframes with low power for transmission, such as a normal subframe with low power for transmission, etc. The relevant art may be referred to for a definition or structure of an ABS or a normal subframe, which shall not be described herein any further.

In a mode of implementation, the downlink channel in the ABS or the low-power subframe may be a PDSCH, and the ratio information may include: an offset value of the ratio between the EPRE of the PDSCH and the EPRE of the CRS, or one or more values of ratio between the EPRE of the PDSCH and the EPRE of the CRS;
wherein, the eNB may transmit the ratio information and the timing indication information to the UE via downlink control information (DCI). The signaling indication method for downlink power allocation shall be described below in detail taking that DCI in an ABS contains an offset value of the ratio as an example.

Taking that an offset value is configured as an example, if the DCI is used to carry signaling, the signaling may be divided into N groups, each group containing two signaling elements, one is an offset value of a ratio, and the other is timing information. It should be noted that any DCI format is not excluded from carrying the signaling, for example, DCI format 1A may be employed.

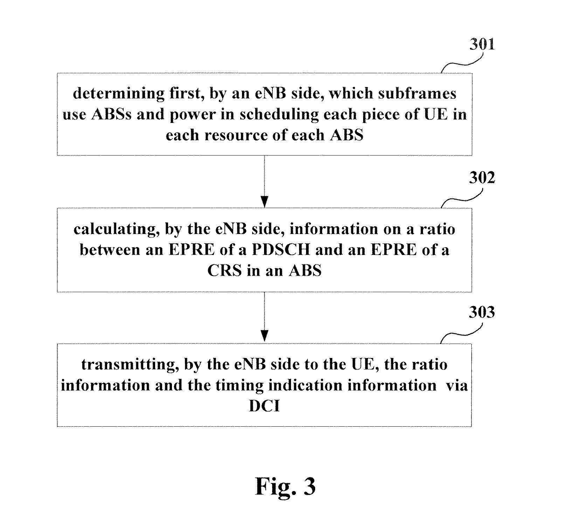

Fig. 3 is a flowchart of the DCI containing an offset value of a ratio of an embodiment of the present application. As shown in Fig. 3, the signaling indication method may include:
step 301: determining first, by an eNB side, which subframes use ABSs and power in scheduling each piece of UE in each resource of each ABS;
step 302: calculating, by the eNB side, information on a ratio between an EPRE of a PDSCH and an EPRE of a CRS in an ABS.

When which pieces of UE scheduled in low-power ABSs is determined according to the determination in step 301, a magnitude that the power ratio used by the PDSCH is lower than the power ratio of the CRS is calculated by the eNB side and is taken as an offset value of the ratio. The offset value of the ratio may be a logarithmic dB value, and may also be a linear value;
and the eNB side may quantize the calculated offset value of the ratio into a bit value, which is then grouped with timing information; and constitution of information of each group may be {ratio offset value, np}ᵢ, i = 0,1,..., N-1; for example, a third ratio information group may be{-20dB, 3}₃,......, and a 21th group may be{-24dB, 13}₂₁, etc.;
step 303: transmitting, by the eNB side to the UE, the ratio information and the timing indication information via DCI;
the eNB side may transmit the signaling in step 302 to each piece of UE at subframe#(n) via the DCI; and the UE demodulates phase and amplitude jointly modulated data at subframe#(n+np) by using a ratio (P_{A}+ ratio offset value) according to received ratio adjustment information of each group; where, P_{A} is a ratio value of downlink power allocation signaling in an existing standard, which may refer to the relevant art, and shall not be described herein any further.

For example, P_{A}=60dB, if a certain piece of UE receives {-20dB, 3}₃, the UE may calculate that power of a third subframe after the current subframe is 60+(-20)=40dB.

It should be noted that the description is schematically given above to that the DCI contains an offset value of a ratio. However, it is not limited thereto. Furthermore, the present application is not limited to an offset value of a ratio, and may also be one or more offset values of ratios, and a particular mode of implementation may be determined according to an actual situation.

Therefore, the UE may demodulate the PDSCH of the third subframe after the current subframe by using 40dB. Hence, even though downlink transmission power varies relatively fast in an ABS pattern, the UE may obtain related power information of a corresponding downlink signal in a real-time manner, thereby accurately demodulating a PDSCH;
wherein, the eNB may transmit the ratio information and the timing indication information to the UE via high-layer signaling. And wherein, the timing indication information may be transmitted in a form of bitmap mapping.

In particular, in a frequency-division duplexing (FDD) system, the timing indication information may be carried by one or more layers of 40 bits, or may be carried by 40×N bits; and wherein N corresponds to the number of bits featuring each power level in a plurality of power levels.

Or, in a time-division duplexing (TDD) system, the timing indication information may be carried by one or more layers of 20, 60 or 70 bits, or may be carried by 20×N, 60×N or 70×N bits; and wherein N corresponds to the number of bits featuring each power level in a plurality of power levels.

The signaling indication method for downlink power allocation shall be described below in detail taking that high-layer signaling in an FDD system contains an offset value of a ratio as an example.

Taking configuring an offset value of a ratio as an example, if high-layer signaling (such as RRC signaling) is used to carry corresponding power configuration information, the signaling may be divided into N groups, each group containing two signaling elements, one being an offset value of a ratio, the other being timing information.

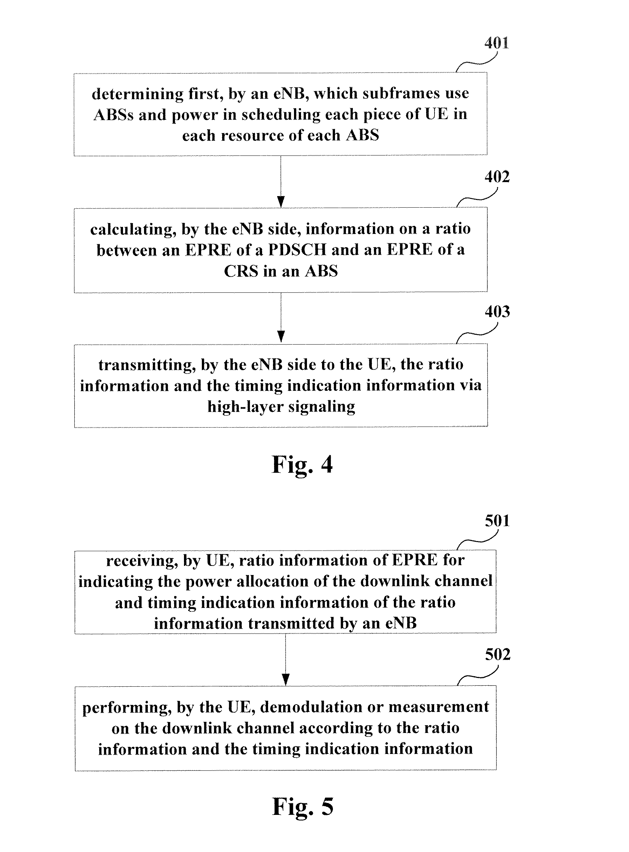

Fig. 4 is a flowchart of the signaling indication method in which high-layer signaling contains an offset value of a ratio of an embodiment of the present application. As shown in Fig. 4, the signaling indication method may include:
step 401: determining first, by an eNB, which subframes use ABSs and power in scheduling each piece of UE in each resource of each ABS;
step 402: calculating, by the eNB side, information on a ratio between an EPRE of a PDSCH and an EPRE of a CRS in an ABS.

When which pieces of UE scheduled in low-power ABSs is determined according to the determination in step 401, a magnitude that the power ratio used by the PDSCH is lower than the power ratio of the CRS is calculated by the eNB side and is taken as an offset value of the ratio. The offset value of the ratio may be a logarithmic dB value, and may also be a linear value; and the eNB side may quantize the calculated offset value of the ratio into a bit value, which is then grouped with timing information; and constitution of information of each group may be {ratio offset value, valid pattern}ᵢ, i = 0,1,..., N-1.

In this embodiment, the used high-layer signaling may be embodied as follows in a standard, where, p-a is a ratio value of the downlink power allocation signaling the existing standard, which shall not be described herein any further; and the offset value of the ratio may use the following data structure:

```
 PDSCH-ConfigDedicated::= SEQUENCE {
   p-a ENUMERATED {
                                      dB-6, dB-4dot77, dB-3, dB-1dot77,
                                      dB0, dB1, dB2, dB3}
 /***************** corresponding to Table 1, start ********************/
   p-a-PowerReductionTableConfig-r11::= CHOICE {
       release NULL,
       setup p-a-PowerReductionTable-r11
   } OPTIONAL, -- Need ON
   p-a-PowerReductionTable-r11::= SEQUENCE (SIZE (1...maxNumLevel)) of
                        p-a-PowerReductionPattern-r11 OPTIONAL, -- Need ON
   p-a-PowerReductionPattern-r11 ::= SEQUENCE {
       delta-p-a ENUMERATED {
                                      dB-20, dB-16, dB-12, dB-8}
       PowerReductionSubframePattern MeasSubframePattern-r10
   }
 /******************* corresponding to Table 1, end *************************/
 }
```

as shown above, delta-p-a may be a newly-defined enumeration type, and may include{ -20dB, -16dB, -12dB, -8dB}, and the offset value of the ratio may be transmitted to the UE via the above data structure; and the timing indication information may be carried by one or more layers of 40 bits; Table 1 shows an example of three layers of 40 bits; where, Level 1 may correspond to -20dB of delta-p-a, Level 2 may correspond to -16dB, and Level 3 may correspond to -12dB;

**Table 1**

| P_{A}' | 40 bits for FDD for each configured power level | | | | | | | | |
|---|---|---|---|---|---|---|---|---|---|
| Level 1 | 1 | 0 | 0 | 0 | ... | 0 | 0 | 0 | 0 |
| Level 2 | 0 | 1 | 0 | 0 | | 0 | 1 | 0 | 0 |
| Level 3 | 0 | 0 | 1 | 0 | | 0 | 0 | 0 | 0 |

or, the timing indication information may be carried by 40×N bits; Table 2 shows an example of 40×2 bits; where, "01" may correspond to -20dB of delta-p-a, "10" may correspond to -16dB, and "11" may correspond to -12dB;

**Table 2**

| | | | | | | | | | |
|---|---|---|---|---|---|---|---|---|---|
| P_{A}' | 40 bits for FDD for each configured power level | | | | | | | | |
| | 01 | 00 | 00 | 10 | ... | 00 | 11 | 00 | 00 |

step 403: transmitting, by the eNB side to the UE, the ratio information and the timing indication information via high-layer signaling;
the eNB side may transmit the signaling in step 402 to each piece of UE via the high-layer signaling; and the UE demodulates phase and amplitude jointly modulated data at a subframe indicated by a bitmap (such as a valid pattern) by using a ratio (P_{A}+ ratio offset value); where, P_{A} is a ratio value downlink power allocation signaling in an existing standard; for example, P_{A}=60dB, if a certain piece of UE receives a valid pattern shown in Table 1, the UE may calculate that power of a first subframe is 60+(-20)=40dB, power of a second subframe is 60+(-16)=44dB, power of a third subframe is 60+(-12)=48dB, ...power of a 38th subframe is 60+(-16)=44dB; or, if a certain piece of UE receives a valid pattern shown in Table 2, the UE may calculate that power of a first subframe is 60+(-20)=40dB, power of a fourth subframe is 60+(-16)=44dB,...power of a 38th subframe is 60+(-12)=48dB.

It should be noted that the description is schematically given above to that the high-layer signaling contains an offset value of a ratio. However, it is not limited thereto. Furthermore, the present application is not limited to an offset value of a ratio, and may also be one or more values of ratio, and a particular mode of implementation may be determined according to an actual situation.

Therefore, even though downlink transmission power varies relatively fast in an ABS pattern, the UE may obtain related power information of a corresponding downlink signal in a real-time manner, thereby accurately demodulating a PDSCH.

In another mode of implementation, the downlink channel in the ABS or the low-power subframe may be a CSI-RS, and the ratio information may include: an offset value of the ratio between the EPRE of the PDSCH and the EPRE of the CSI-RS, or one or more values of ratio between the EPRE of the PDSCH and the EPRE of the CSI-RS.

In particular implementation, the eNB may transmit the ratio information and the timing indication information to the UE via the DCI; and the UE may perform channel measurement at subframe#(n+np) by using a ratio (P_{C}+ ratio offset value) according to received ratio adjustment information of each group; where, P_{C} is a ratio value of downlink power allocation signaling in an existing standard, which may refer to the prior art, and shall not be described herein any further

Therefore, the UE may obtain related power information of a corresponding downlink signal after receiving the ratio information and the timing indication information, thereby accurately performing channel condition measurement.

In particular implementation, the eNB may also transmit the ratio information and the timing indication information to the UE via high-layer signaling. And wherein, the timing indication information may be transmitted in a form of bitmap; wherein, the UE may perform the channel measurement at an indicated subframe by using a ratio (P_{C}+ratio offset value) according to received ratio adjustment information of each group; where, P_{C} is a ratio value of the downlink power allocation signaling in an existing standard.

In this embodiment, when the downlink channel in the ABS or the low-power subframe is a CSI-RS, the ratio information may further include: an offset value of the ratio between the EPRE of the CSI-RS and the EPRE of the CRS, or one or more values of ratio between the EPRE of the CSI-RS and the EPRE of the CRS. A particular mode of implementation may be determined according to an actual situation, which shall not be described herein any further.

It should be noted that the description is schematically given above to that the DCI or the high-layer signaling contains an offset value of a ratio. However, it is not limited thereto. Furthermore, the present application is not limited to an offset value of a ratio, and may also be one or more values of ratio, and a particular mode of implementation may be determined according to an actual situation.

In this embodiment, the eNB notifies the UE that high-layer signaling or DCI of a physical layer may be used, a UE-specific manner may be used, or a cell-specific manner may be used. A particular mode of implementation may be determined according to an actual situation.

Hence, the present application may solve an existing problem that the UE cannot correctly demodulate phase and amplitude jointly modulated data, or cannot accurately perform channel state measurement by using a reference symbol (such as a CSI-RS), or cannot demodulate a phase and amplitude jointly modulated control channel (such as an e-PCFICH, an ePDCCH, and an ePHICH, etc.) placed in a data region, when power used by a physical channel downlink carrying a unicast service in an ABS or a low-power subframe varies dynamically.

In this embodiment, different from that related ratio information is configured by using semi-static high-layer signaling in an existing LTE standard system, new signaling is devised as a supplement to the existing standard by using a relation between relatively dynamic variation of power and an ABS pattern used at the network side, so as to achieve an object as follows: even though the power used by the data channels or the CSI-RSs between ABSs varies relatively fast, with the method of design of signaling of the present application, the eNB side may still enable the UE to correctly demodulate a PDSCH (even though the data carried by it use a phase and amplitude joint modulation manner), or to correctly perform channel state measurement by using the CSI-RS.

It can be seen from the above embodiment that the eNB transmits the EPRE ratio information indicating power allocation of the downlink channel in the ABS or the low-power subframe and the timing indication information of the ratio information to the UE, such that the UE processes the downlink channel in the ABS or the low-power subframe according to the ratio information and the timing indication information. When power used by a physical channel downlink carrying a unicast service in the ABS or the low-power subframe varies dynamically, the UE may correctly demodulate phase and amplitude jointly modulated data, or accurately perform channel state measurement.

### Embodiment 2

An embodiment of the present application provides a signaling indication method for downlink power allocation, applicable to a downlink channel in an ABS or a low-power subframe, with the parts identical to those at the eNB side being not going to be described herein any further.

Fig. 5 is a flowchart of the signaling indication method of the embodiment of the present application. As shown in Fig. 5, at a UE side, the signaling indication method includes:
step 501: receiving, by UE, ratio information of EPRE for indicating the power allocation of the downlink channel and timing indication information of the ratio information transmitted by an eNB; and
step 502: processing, by the UE, the downlink channel according to the ratio information and the timing indication information.

In a mode of an implementation, the downlink channel in the ABS or the low-power subframe may be a PDSCH, and the ratio information may include: an offset value of the ratio between an EPRE of the PDSCH and an EPRE of a CRS, or one or more values of ratio between an EPRE of the PDSCH and an EPRE of a CRS.

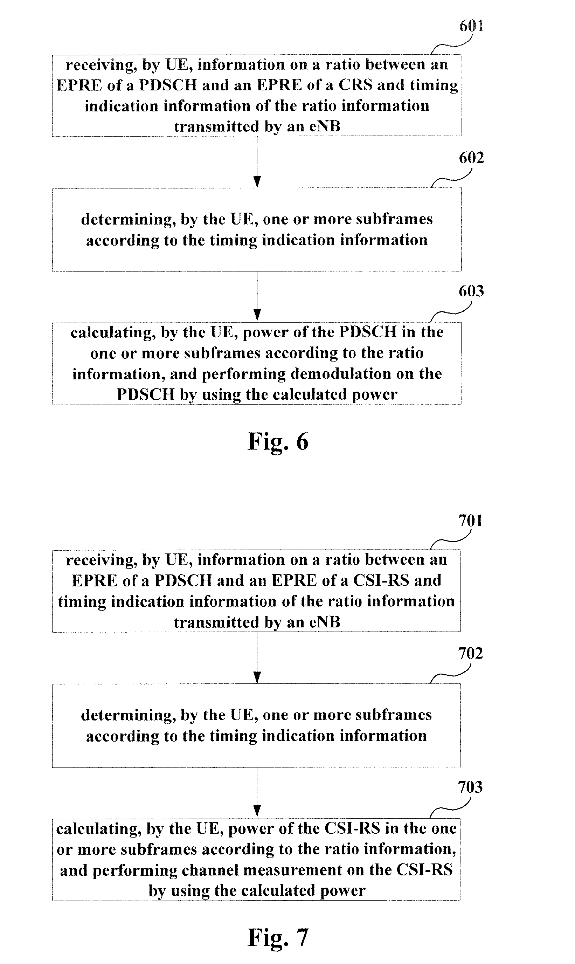

Fig. 6 is another flowchart of the signaling indication method of the embodiment of the present application. As shown in Fig. 6, the signaling indication method includes:
step 601: receiving, by UE, information on a ratio between an EPRE of a PDSCH and an EPRE of a CRS and timing indication information of the ratio information transmitted by an eNB;
step 602: determining, by the UE, one or more subframes according to the timing indication information; and
step 603: calculating, by the UE, power of the PDSCH in the one or more subframes according to the ratio information, and performing demodulation on the PDSCH by using the calculated power.

In another mode of an implementation, the downlink channel in the ABS or the low-power subframe may be a CSI-RS, and the ratio information may include: an offset value of the ratio between an EPRE of the PDSCH and an EPRE of the CSI-RS, or one or more ratio values between an EPRE of the PDSCH and an EPRE of the CSI-RS.

Fig. 7 is a further flowchart of the signaling indication method of the embodiment of the present application. As shown in Fig. 7, the signaling indication method includes:
step 701: receiving, by UE, information on a ratio between an EPRE of a PDSCH and an EPRE of a CSI-RS and timing indication information of the ratio information transmitted by an eNB;
step 702: determining, by the UE, one or more subframes according to the timing indication information; and
step 703: calculating, by the UE, power of the CSI-RS in the one or more subframes according to the ratio information, and performing channel measurement on the CSI-RS by using the calculated power.

In this embodiment, when the downlink channel in the ABS or the low-power subframe is a CSI-RS, the ratio information may further include: an offset value of the ratio between an EPRE of the CSI-RS and an EPRE of the CRS, or one or more values of the ratio between an EPRE of the CSI-RS and an EPRE of the CRS. A particular mode of implementation may be determined according to an actual situation.

It can be seen from the above embodiment that the UE processes the downlink channel in the ABS or the low-power subframe according to the EPRE ratio information indicating power allocation of the downlink channel in the ABS or the low-power subframe transmitted by the eNB and the timing indication information. When power used by a physical channel downlink carrying a unicast service in the ABS or the low-power subframe varies dynamically, the UE may correctly demodulate phase and amplitude jointly modulated data, or accurately perform channel state measurement.

### Embodiment 3

An embodiment of the present application provides an eNB, corresponding to the signaling indication method for downlink power allocation of Embodiment 1, with the parts identical to those in Embodiment 1 being not going to be described herein any further.

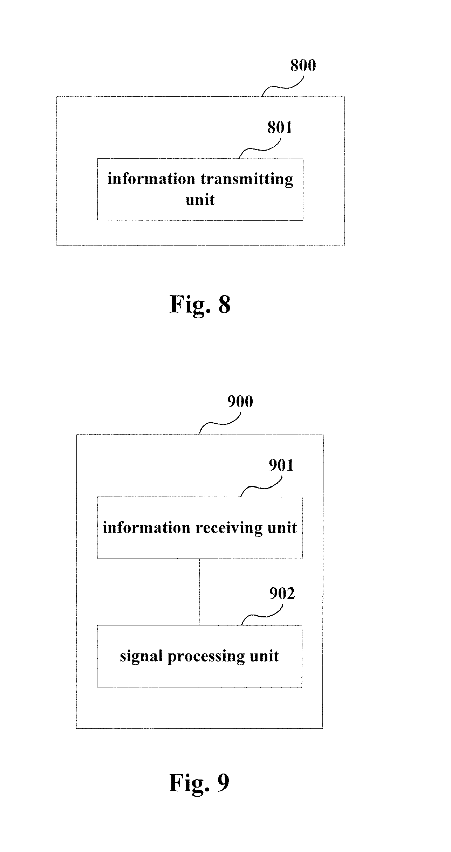

Fig. 8 is a schematic diagram of the structure of the eNB of the embodiment of the present application. As shown Fig. 8, the eNB 800 includes: an information transmitting unit 801. And the relevant art may be referred to for other parts of the eNB, which shall not be described herein any further; wherein, the information transmitting unit 801 is configured to transmit to UE ratio information of EPRE and timing indication information of the ratio information, such that the UE processes the downlink channel according to the ratio information and the timing indication information.

In a mode of implementation, the downlink channel in the ABS or the low-power subframe may be a PDSCH, and the ratio information may include: an offset value of the ratio between the EPRE of the PDSCH and the EPRE of a CRS, or one or more values of the ratio between the EPRE of the PDSCH and the EPRE of a CRS.

In another mode of implementation, the downlink channel in the ABS or the low-power subframe may be a CSI-RS, and the ratio information may include: an offset value of the ratio between the EPRE of the PDSCH and the EPRE of the CSI-RS, or one or more values of the ratio between the EPRE of the PDSCH and the EPRE of the CSI-RS.

In this embodiment, when the downlink channel in the almost blank subframe or the low-power subframe is a CSI-RS, the ratio information may further include: an offset value of the ratio between the EPRE of the CSI-RS to the EPRE of the CRS, or one or more values of the ratio between the EPRE of the CSI-RS and the EPRE of the CRS. A particular mode of implementation may be determined according to an actual situation.

In particular implementation, the information transmitting unit 801 may transmit to the UE the ratio information and the timing indication information via DCI.

Or, the information transmitting unit 801 may also transmit to the UE the ratio information and the timing indication information via high-layer signaling; wherein, the timing indication information may be transmitted via a bitmap.

It can be seen from the above embodiment that the eNB transmits to the UE the EPRE ratio information indicating power allocation of the downlink channel in the ABS or the low-power subframe and the timing indication information of the ratio information, such that the UE processes the downlink channel in the ABS or the low-power subframe according to the ratio information and the timing indication information. When power used by a physical channel downlink carrying a unicast service in the ABS or the low-power subframe varies dynamically, the UE may correctly demodulate phase and amplitude jointly modulated data, or accurately perform channel state measurement.

### Embodiment 4

An embodiment of the present application provides UE, corresponding to the signaling indication method for downlink power allocation of Embodiment 2, with the parts identical to those in Embodiment 2 being not going to be described herein any further.

Fig. 9 is a schematic diagram of the structure of the UE of the embodiment of the present application. As show in Fig. 9, the UE 900 includes: an information receiving unit 901 and a signal processing unit 902. And the relevant art may be referred to for other parts of the UE, which shall not be described herein any further; wherein, the information receiving unit 901 is configured to receive ratio information of EPRE and timing indication information of the ratio information transmitted by an eNB; and the signal processing unit 902 is configured to process the downlink channel according to the ratio information and the timing indication information.

In a mode of implementation, the downlink channel in the ABS or the low-power subframe may be a PDSCH, and the ratio information may include: an offset value of the ratio between the EPRE of the PDSCH and the EPRE of a CRS, or one or more values of the ratio between the EPRE of the PDSCH and the EPRE of a CRS.

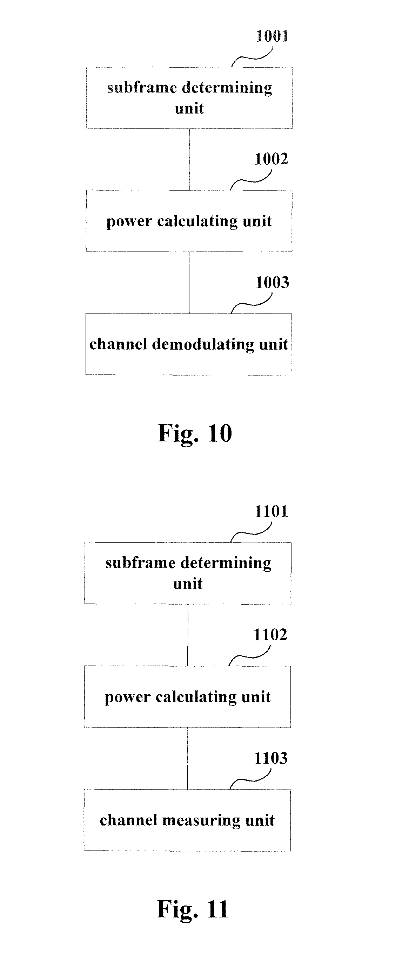

Fig. 10 is a schematic diagram of the structure of the signal processing unit of the embodiment of the present application. As show in Fig. 10, the signal processing unit 902 may include: a subframe determining unit 1001, a power calculating unit 1002 and a channel demodulating unit 1003; wherein, the subframe determining unit 1001 is configured to determine one or more subframes according to the timing indication information; the power calculating unit 1002 is configured to calculate the power of the PDSCH in the one or more subframes according to the ratio information; and the channel demodulating unit 1003 is configured to perform demodulation on the PDSCH by using the calculated power.

In another mode of implementation, the downlink channel in the almost blank subframe or the low-power subframe may be a CSI-RS, and the ratio information may include: an offset value of the ratio between the EPRE of the PDSCH and the EPRE of the CSI-RS, or one or more values of the ratio between the EPRE of the PDSCH and the EPRE of the CSI-RS.

In this embodiment, when the downlink channel in the almost blank subframe or the low-power subframe is a CSI-RS, the ratio information may further include: an offset value of the ratio between the EPRE of the CSI-RS and the EPRE of the CRS, or one or more values of the ratio of the EPRE of the CSI-RS and the EPRE of the CRS. A particular mode of implementation may be determined according to an actual situation.

Fig. 11 is another schematic diagram of the structure of the signal processing unit of the embodiment of the present application. As show in Fig. 11, the signal processing unit 902 may include: a subframe determining unit 1101, a power calculating unit 1102 and a channel measuring unit 1103; wherein, the subframe determining unit 1101 is configured to determine one or more subframes according to the timing indication information; the power calculating unit 1102 is configured to calculate the power of the CSI-RS in the one or more subframes according to the ratio information; and the channel measuring unit 1103 is configured to perform channel measurement on the CSI-RS by using the calculated power.

It can be seen from the above embodiment that the UE processes the downlink channel in the ABS or the low-power subframe according to the EPRE ratio information indicating power allocation of the downlink channel in the ABS or the low-power subframe transmitted by the eNB and the timing indication information. When power used by a physical channel downlink carrying a unicast service in the ABS or the low-power subframe varies dynamically, the UE may correctly demodulate phase and amplitude jointly modulated data, or accurately perform channel state measurement.

An embodiment of the present application further provides a computer-readable program, wherein when the program is executed in an eNB, the program enables a computer to carry out the signaling indication method for downlink power allocation as described in Embodiment 1 in the eNB.

An embodiment of the present application further provides a storage medium in which a computer-readable program is stored, wherein the computer-readable program enables a computer to carry out the signaling indication method for downlink power allocation as described in Embodiment 1 in an eNB.

An embodiment of the present application further provides a computer-readable program, wherein when the program is executed in UE, the program enables a computer to carry out the signaling indication method for downlink power allocation as claimed described in Embodiment 2 in the UE.

An embodiment of the present application further provides a storage medium in which a computer-readable program is stored, wherein the computer-readable program enables a computer to carry out the signaling indication method for downlink power allocation as described in Embodiment 2 in UE.

The above apparatuses and methods of the present application may be implemented by hardware, or by hardware in combination with software. The present application relates to such a computer-readable program that when the program is executed by a logic device, the logic device is enabled to carry out the apparatus or components as described above, or to carry out the methods or steps as described above. The present application also relates to a storage medium for storing the above program, such as a hard disk, a floppy disk, a CD, a DVD, and a flash memory, etc.

One or more functional blocks and/or one or more combinations of the functional blocks in the accompanying drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present application is described above with reference to particular embodiments. However, it should be understood by those skilled in the art that such a description is illustrative only, and not intended to limit the protection scope of the present application. Various variants and modifications may be made by those skilled in the art according to the spirits and principle of the present application, and such variants and modifications fall within the scope of the present application.

## Claims

1. A signaling indication method for downlink power allocation, applicable to a downlink channel in an almost blank subframe (ABS) or a low-power subframe, the signaling indication method comprising:
transmitting, by an eNB to UE, ratio information of energy per-resource element (EPRE) for indicating power allocation of the downlink channel and timing indication information of the ratio information, such that the UE performs demodulation or measurement on the downlink channel according to the ratio information and the timing indication information.

2. The signaling indication method according to claim 1, wherein the downlink channel in the ABS or the low-power subframe is a physical downlink shared channel (PDSCH); and the ratio information comprises: an offset value of the ratio between the EPRE of the PDSCH and the EPRE of a common reference symbol (CRS), or one or more values of the ratio between the EPRE of the PDSCH and the EPRE of the CRS.

3. The signaling indication method according to claim 1, wherein the downlink channel in the ABS or the low-power subframe is a channel state information reference symbol (CSI-RS); and the ratio information comprises: an offset value of the ratio between the EPRE of a PDSCH and the EPRE of the CSI-RS, or one or more values of the ratio between the EPRE of the PDSCH and the EPRE of the CSI-RS; or the ratio information comprises: an offset value of the ratio between the EPRE of the CSI-RS and the EPRE of a CRS, or one or more values of the ratio between the EPRE of the CSI-RS and the EPRE of the CRS.

4. The signaling indication method according to any one of claims 1-3, wherein the eNB transmits to the UE the ratio information and the timing indication information via downlink control information.

5. The signaling indication method according to any one of claims 1-3, wherein the eNB transmits to the UE the ratio information and the timing indication information via high-layer signaling.

6. The signaling indication method according to claim 5, wherein the timing indication information is transmitted in a form of bitmap mapping.

7. The signaling indication method according to claim 6, wherein in a frequency-division duplexing system, the timing indication information is carried by one or more layers of 40 bits, or the timing indication information is carried by 40×N bits; and wherein N corresponds to the number of bits featuring each power level in a plurality of power levels.

8. The signaling indication method according to claim 6, wherein in a time-division duplexing system, the timing indication information is carried by one or more layers of 20, 60 or 70 bits, or the timing indication information is carried by 20×N, 60×N or 70×N bits; and wherein N corresponds to the number of bits featuring each power level in a plurality of power levels.

9. The signaling indication method according to any one of claims 1-3, wherein the downlink channel uses a modulation manner combining phase and amplitude.

10. A signaling indication method for downlink power allocation, applicable to a downlink channel in an ABS or a low-power subframe, the signaling indication method comprising:
receiving, by UE, ratio information of energy per-resource element (EPRE) for indicating the power allocation of the downlink channel and timing indication information of the ratio information transmitted by an eNB; and
performing, by the UE, demodulation or measurement on the downlink channel, according to the ratio information and the timing indication information.

11. The signaling indication method according to claim 10, wherein the downlink channel in the ABS or the low-power subframe is a physical downlink shared channel (PDSCH); and the ratio information comprises: an offset value of the ratio between the EPRE of the PDSCH and the EPRE of a common reference symbol (CRS), or one or more values of the ratio between the EPRE of the PDSCH and the EPRE of the CRS.

12. The signaling indication method according to claim 11, wherein the demodulating or measuring the downlink channel by the UE according to the ratio information and the timing indication information comprises:
determining, by the UE, one or more subframes according to the timing indication information; and
calculating the power of the PDSCH in the one or more subframes according to the ratio information, and performing demodulation on the PDSCH by using the calculated power.

13. The signaling indication method according to claim 10, wherein the downlink channel in the ABS or the low-power subframe is a channel state information reference symbol (CSI-RS); and the ratio information comprises: an offset value of the ratio between the EPRE of a PDSCH and the EPRE of the CSI-RS, or one or more values of the ratio between the EPRE of the PDSCH and the EPRE of the CSI-RS; or the ratio information comprises: an offset value of the ratio between the EPRE of the CSI-RS and the EPRE of a CRS, or one or more values of the ratio between the EPRE of the CSI-RS and the EPRE of the CRS.

14. The signaling indication method according to claim 13, wherein the demodulating or measuring the downlink channel by the UE according to the ratio information and the timing indication information comprises:
determining, by the UE, one or more subframes according to the timing indication information; and
calculating the power of the CSI-RS in the one or more subframes according to the ratio information, and performing channel measurement on the CSI-RS by using the calculated power.

15. An eNB, comprising:
an information transmitting unit, configured to transmit to UE ratio information of EPRE and timing indication information of the ratio information, such that the UE performs demodulation or measurement on the downlink channel according to the ratio information and the timing indication information;
wherein the ratio information is used for indicating the power allocation of the downlink channel in an ABS or a low-power subframe.

16. The eNB according to claim 15, wherein the downlink channel in the ABS or the low-power subframe is a PDSCH; and the ratio information comprises: an offset value of the ratio between the EPRE of the PDSCH and the EPRE of a CRS, or one or more values of the ratio between the EPRE of the PDSCH and the EPRE of the CRS.

17. The eNB according to claim 15, wherein the downlink channel in the ABS or the low-power subframe is a CSI-RS; and the ratio information comprises: an offset value of the ratio between the EPRE of a PDSCH and the EPRE of the CSI-RS, or one or more values of the ratio between the EPRE of the PDSCH and the EPRE of the CSI-RS; or the ratio information comprises: an offset value of the ratio between the EPRE of the CSI-RS and the EPRE of a CRS, or one or more values of the ratio between the EPRE of the CSI-RS and the EPRE of the CRS.

18. The eNB according to any one of claims 15-17, wherein the information transmitting unit transmits to the UE the ratio information and the timing indication information via downlink control information.

19. The eNB according to any one of claims 15-17, wherein the information transmitting unit transmits to the UE the ratio information and the timing indication information via high-layer signaling.

20. UE, comprising:
an information receiving unit, configured to receive ratio information of EPRE and timing indication information of the ratio information transmitted by an eNB; wherein the ratio information is used for indicating the power allocation of the downlink channel in an ABS or a low-power subframe; and
a signal processing unit, configured to perform demodulation or measurement on the downlink channel according to the ratio information and the timing indication information.

21. The UE according to claim 20, wherein the downlink channel in the ABS or the low-power subframe is a PDSCH; and the ratio information comprises: an offset value of the ratio between the EPRE of the PDSCH and the EPRE of a CRS, or one or more values of the ratio between the EPRE of the PDSCH and the EPRE of the CRS.

22. The UE according to claim 21, wherein the signal processing unit comprises:
a subframe determining unit, configured to determine one or more subframes, according to the timing indication information;
a power calculating unit, configured to calculate the power of the PDSCH in the one or more subframes according to the ratio information; and
a channel demodulating unit, configured to perform demodulation on the PDSCH by using the calculated power.

23. The UE according to claim 20, wherein the downlink channel in the ABS or the low-power subframe is a CSI-RS; and the ratio information comprises: an offset value of the ratio between the EPRE of a PDSCH and the EPRE of the CSI-RS, or one or more values of the ratio between the EPRE of the PDSCH and the EPRE of the CSI-RS; or the ratio information comprises: an offset value of the ratio between the EPRE of the CSI-RS and the EPRE of a CRS, or one or more values of the ratio between the EPRE of the CSI-RS and the EPRE of the CRS.

24. The UE according to claim 23, wherein the signal processing unit comprises:
a subframe determining unit, configured to determine one or more subframes according to the timing indication information;
a power calculating unit, configured to calculate the power of the CSI-RS in the one or more subframes according to the ratio information; and
a signal measuring unit, configured to perform channel measurement on the CSI-RS by using the calculated power.

25. A computer-readable program, wherein when the program is executed in an eNB, the program enables a computer to carry out the signaling indication method for downlink power allocation as claimed in any one of claims 1-9 in the eNB.

26. A storage medium in which a computer-readable program is stored, wherein the computer-readable program enables a computer to carry out the signaling indication method for downlink power allocation as claimed in any one of claims 1-9 in an eNB.

27. A computer-readable program, wherein when the program is executed in UE, the program enables a computer to carry out the signaling indication method for downlink power allocation as claimed in any one of claims 10-14 in the UE.

28. A storage medium in which a computer-readable program is stored, wherein the computer-readable program enables a computer to carry out the signaling indication method for downlink power allocation as claimed in any one of claims 10-14 in UE.
